(19) Europäisches Patentamt / European Patent Office / Office européen des brevets

(11) **EP 3 025 126 B1**

(12) **EUROPEAN PATENT SPECIFICATION**

(45) Date of publication and mention
of the grant of the patent:
**17.01.2018 Bulletin 2018/03**

(51) Int Cl.:
***G01D 5/249*** *(2006.01)*    ***G01D 5/347*** *(2006.01)*

(21) Application number: **14758190.4**

(22) Date of filing: **28.07.2014**

(86) International application number:
**PCT/US2014/048425**

(87) International publication number:
**WO 2015/013705 (29.01.2015 Gazette 2015/04)**

(54) **SENSING SYSTEM FOR ABSOLUTE ANGULAR POSITION**

ABSOLUTE WINKELPOSITION ERFASSUNGSSYSTEM

SYSTÈME DE DÉTECTION POUR POSITION ANGULAIRE ABSOLUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.07.2013 US 201313951847
26.07.2013 US 201313951858**

(43) Date of publication of application:
**01.06.2016 Bulletin 2016/22**

(73) Proprietor: **BEI Sensors & Systems Company Inc.
Moorpark, CA 93021 (US)**

(72) Inventor: **PUTINIER, Rene
Chino Hills, CA 91709 (US)**

(74) Representative: **Regimbeau
20, rue de Chazelles
75847 Paris Cedex 17 (FR)**

(56) References cited:
**EP-A1- 0 272 544        EP-A1- 1 637 843
WO-A1-2006/087627    DE-A1-102011 078 597**

## EP 3 025 126 B1

**Description**

RELATED APPLICATION

This application is a continuation of and claims priority to U.S. Patent Application No. 13/951,847, filed July 26, 2013 and U.S. Patent Application No. 13/951,858, filed July 26, 2013. The entire teachings of the above applications are incorporated herein by reference.

BACKGROUND

A Hall effect sensor is a sensor that varies its output in response to a magnetic field. A Hall effect sensor can be used to determine an angular position of a rotating member. For such a use, Hall effect sensors generally output an angular position of a rotating member. For example, the output of a Hall effect sensor can be 0-360 degrees, or 0-2π radians.

International application WO 2006/087627 A1 discloses an example of a monitoring device for a shaft operable to determine the position of the shaft as it rotates, wherein said monitoring device includes magnetic sensing means that may comprise one or more Hall effect elements.

Patent application DE 10 2011 078597 A discloses another method for measuring the absolute angle of rotation in systems in which a rotating element cooperates with a converter which converts the rotational movement of the rotating element into a linear or curved movement of the converter.

SUMMARY

According to the invention, there is disclosed a sensor for determining absolute angular position of a rotating member as disclosed in appended claim 1 and corresponding dependent claims.

The sensor may further include a complimentary retaining pair configured to cause the sleeve to travel axially along the shaft as a function of rotation of the sensor rotor.

The at least one second transducer may include a plurality of transducers. A first number of the plurality of transducers may be a function of a second number of sensor rotor turns the sensor can count, a sensing length of the sensor, or a combination thereof.

The first number of the plurality of transducers may be six transducers, and the second number of turns the sensor can count may be ten.

The sensor may further include a processor configured to convert output from the first transducer and the at least one second transducer to a representation of an absolute angular position of the rotating member.

The sleeve may be coupled with a stopping bearing configured to hold the sleeve in association with the threads of the shaft in event of a runout to enable the sleeve to be reassociated with the shaft responsive to reverse turning of the sensor rotor. A spring-loaded ball assembly is an example of a stopping bearing.

The at least one second transducer may be mounted on a printed circuit board.

The printed circuit board may be a daughter printed circuit board that may be mounted to a mother circuit board at a perpendicular or other angle. The first transducer may be coupled to the mother circuit board.

According to another aspect of the invention, there is disclosed a method for determining absolute angular position of a rotating member as disclosed in appended claim 9 and corresponding dependent claims.

The method may further include causing the sleeve to travel axially along the shaft as a function of rotation of the rotor by a complimentary retaining pair.

The method may further include determining a first number of a plurality of transducers as a function of a second number of rotor turns the sensor can count, a sensing length of the sensor, or a combination thereof, wherein the at least one second transducer includes the plurality of transducers.

The first number of the plurality of transducers determined may be six transducers and the second number of turns the sensor can count may be ten.

The method may further include converting, at a processor, output from the first transducer and the at least one second transducer to a representation of an absolute angular position of the rotating member.

The method may further include coupling the sleeve with a stopping bearing configured to hold the sleeve in association with the threads of the shaft in event of a runout to enable the sleeve to be reassociated with the shaft responsive to reverse turning of the rotor.

The method may further include mounting the at least one second transducer on a printed circuit board.

The method may further include mounting the printed circuit board to a mother circuit board at a perpendicular angle, the first transducer being coupled to the mother circuit board, wherein the printed circuit board is a daughter printed circuit board.

In another embodiment not part of the invention, there is disclosed a method of determining an absolute angular position of a rotating member may include selecting at least one sensor of a plurality of sensors to serve as an at least one selected sensor. The selecting may be based on outputs of the plurality of sensors. The method may further include calculating the absolute angular position of the rotating member based on an output of the at least one selected sensor and an angular position of the rotating member.

Selecting the at least one sensor may include determining which sensor of the plurality of sensors is providing a highest output and selecting the at least one selected sensor based on a location of the at least one selected sensor relative to the sensor determined to have the highest output.

Calculating the absolute angular position may include calculating a first difference of a first output of a first sensor among a plurality of sensors of the at least one selected sensor and a second output of a second sensor among the plurality of sensors of the at least one selected sensor, calculating a cutoff value based on a second difference of the first difference and a ratio of the angular position of the rotating member, calculating a turn number based on the cutoff value, an identifier of the at least one selected sensor, and the angular position of the rotating member, and returning an output value based on an output difference of a multiple of the turn value from the angular position of the rotating member.

Calculating the turn value may include comparing the cutoff value to at least one range cutoff, determining a corresponding range thereof, and calculating the turn value based on the corresponding range determined.

Calculating the turn value may be based on a value indicating a location of a given sensor generating the highest output relative to other sensors among the plurality of sensors.

The multiple of the turn value may be 4096.

The output value may represent the absolute angular rotation and the angular rotation of the rotating member.

The method may further include adding a constant to the first difference.

The plurality of sensors may be include six sensors.

The method may be performed on at least one of a field programmable gate array (FPGA), processor, and look up table (LUT).

In another embodiment not part of the invention, there is disclosed a system for determining an absolute angular position of a rotating member may include a sensor selection module configured to select at least one sensor of a plurality of sensors to serve as an at least one selected sensor. The selecting may be based on outputs of the plurality of sensors. The system may further include a calculation module configured to calculate the absolute angular position of the rotating member based on an output of the at least one selected sensor and an angular position of the rotating member.

The selection module may be further configured to select which sensor of the plurality of sensors is providing a highest output, and select the at least one sensor based on a location of the at least one selected sensor relative to the sensor determined to have the highest output.

The calculation module may be further configured to calculate a first difference of a first output of a first sensor among the plurality of sensors of the at least one selected sensor and a second output of a second sensor of the plurality of sensors of the determined at least one sensor. The calculation module may be further configured to calculate a cutoff value based on a second difference of the first difference and a ratio of the angular position of the rotating member. The calculation module may be still further configured to calculate a turn number based on the cutoff value, an identifier of the at least one selected sensor, and the angular position of the rotating member and to return an output value based on an output difference of a multiple of the turn value from the angular position of the rotating member.

The calculation module may be further configured to compare the cutoff value to at least one range cutoff, determine a corresponding range thereof, and calculate the turn value based on the corresponding range determined.

The calculation module may be further configured to calculate the turn value based on a location of a given sensor with a highest output relative to other sensors among the plurality of sensors.

The multiple of the turn value may be 4096.

The output value may represent the absolute angular rotation and the relative angular position of the rotating member.

The calculation module may be further configured to add a constant to the first difference.

The plurality of sensors may include six sensors.

The system may be at least one of a field programmable gate array (FPGA), processor, and look up table (LUT).

In another embodiment not part of the invention, there is disclosed a method of determining an absolute angular position of a rotating member may include selecting at least one output of at least one sensor of a plurality of sensors based on a given output of a given sensor of the plurality of sensors. The method may further include calculating the absolute angular position of the rotating member based on the at least one output selected and an angular position of the rotating member.

The selecting may include identifying the given sensor of the plurality of sensors as providing a highest output relative to other outputs of the plurality of sensors and further wherein each at least one output selected is a successive output provided by a corresponding successive sensor that is successive relative to the given sensor in an ordered list of the plurality of sensors.

Calculating the absolute angular position may include calculating a first difference, wherein for multiple successive outputs the first difference may be based on a first delta value between each at least one output selected and further wherein for a single successive output the first difference may be based on a second delta value between a given constant value and the at least one output selected. Calculating the absolute angular position may further include calculating a cutoff value based on a second difference between the first difference and a scaled value of the angular position of the rotating member. Calculating the absolute angular position may further include. Calculating the absolute angular position may further include calculating a turn number based on the cutoff value and a successive positional value representing an order of position of a next successive sensor immediately succeeding the given sensor in the ordered list. Calculating the absolute angular position may further include returning an output value, the output value may be based on a third difference between a multiple of the turn value and the angular position of the rotating member.

Calculating the turn value may include comparing the cutoff value to at least one range cutoff, determining a corresponding range thereof, and calculating the turn value based on the corresponding range determined.

The multiple of the turn value may be a first multiple and calculating the turn value may further include a second multiple of the successive positional value adjusted by an offset value determined based on the corresponding range determined.

The output value may represent the absolute angular rotation and the relative angular position of the rotating member.

The given constant value may be a first given constant value and for multiple successive outputs the first difference may be offset by a second given constant value.

BRIEF DESCRIPTION OF THE DRAWINGS

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.

Fig. 1 is a block diagram illustrating an example embodiment of a Hall effect sensor employed by the present invention.

Fig. 2 is a block diagram illustrating an example embodiment of a traditional Hall effect sensor (with a spring).

Fig. 3 is a block diagram illustrating an example embodiment of the Hall effect sensor 302 with a moving sleeve.

Fig. 4A is a block diagram illustrating an example embodiment of the rotating member with a sleeve in a full clockwise position.

Fig. 4B is a block diagram illustrating an example embodiment of the rotating member with a sleeve in a middle position.

Fig. 4C is a block diagram illustrating another example embodiment of the rotating member with a sleeve in a full counter clockwise position.

Fig. 5 is a block diagram illustrating an example embodiment of a sleeve.

Fig. 6A is a block diagram illustrating a cross-section of a Hall effect sensor employed by an embodiment of the present invention.

Fig. 6B is a block diagram illustrating a top-down view of a cross section the Hall effect sensor employed by an embodiment of the present invention.

Fig. 6C is a block diagram illustrating an example embodiment of the present invention from another top view illustrating a cross-section of the Hall effect sensor.

Fig. 7A is a block diagram illustrating an example embodiment of the main (mother) printed circuit board from a top perspective and the linear (daughter) printed circuit board.

Fig. 7B is a block diagram illustrating an example embodiment of the main printed circuit board from a bottom perspective.

Fig. 7C is a block diagram illustrating an example embodiments of an interconnect between the main printed circuit board and the linear printed circuit board.

Fig. 7D is a block diagram illustrating another example embodiment of the linear printed circuit board coupled with the main printed circuit board.

Fig. 8A is a diagram illustrating an example embodiment of the linear printed circuit board shown in a slot in the housing.

Fig. 8B is a diagram illustrating an example embodiment of the Hall effect sensor in its housing.

Fig. 9A is a block diagram illustrating an example embodiment of the rotating member including a sleeve employed by an example embodiment of the present invention.

Fig. 9B is a block diagram illustrating an example embodiment of the sleeve.

Fig. 10A is a graph illustrating an example embodiment of an ideal linear sensor output.

Fig. 10B is a graph illustrating example embodiments of linear sensor output from the linear printed circuit board over ten turns of the rotor.

Fig. 10C is a block diagram illustrating the orientation of the plurality of sensors.

Fig. 11 is a graph illustrating an example embodiment of differences between (or among) the sensors, which is a property employed to reduce the interference of the rotary magnet.

Fig. 12A is a graph illustrating a Hall effect sensor value and a corresponding correlation value.

Fig. 12B is a graph illustrating a hall function that indicates when the Hall effect sensor has made a complete turn.

Fig. 12C is a graph illustrating a turn function.

Fig. 13 is a block diagram illustrating the parts involved in making the Hall effect sensor.

Fig. 14 is a flow diagram illustrating an example embodiment of a process employed by an example embodiment of the present invention.

Fig. 15 is a flow diagram illustrating an example embodiment of a method used to implement the process of Fig. 14.

## DETAILED DESCRIPTION

A description of example embodiments of the invention follows.

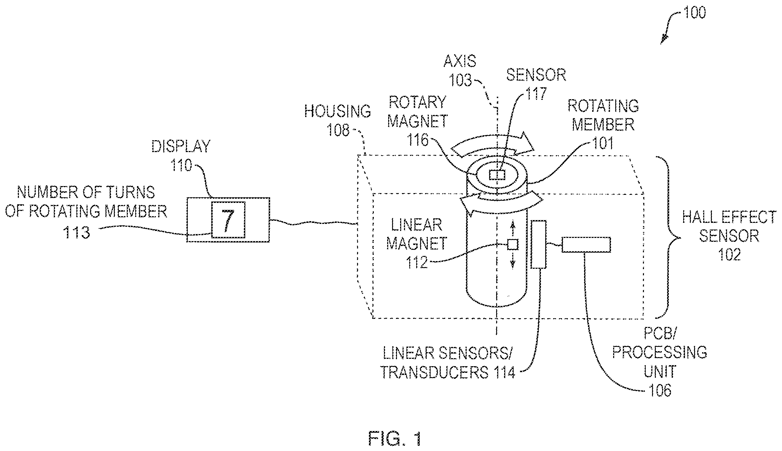

Fig. 1 is a block diagram 100 illustrating an example embodiment of a Hall effect sensor 102 employed by an embodiment the present invention. A Hall effect sensor 102 includes a rotating member 101 configured to rotate along an axis. The rotating member 101 is enclosed in a housing 108. The housing also includes at least one transducer 114 that is connected to a printed circuit board (PCB) or processing unit 106. The Hall effect sensor 102 also includes a magnet positioned such that the at least one transducer 114 can detect whether the rotating member 101 has made a turn. The rotating member 101 can turn either clockwise or counterclockwise. In a traditional Hall effect sensor 102 arrangement, the sensor can determine angular rotation of the rotating member 101 but cannot, however, determine a number of turns the rotating member 101 has made.

In the Hall effect sensor 102 arrangement employed by the embodiment of the present invention of Fig. 1, multiple linear sensors/transducers 114 determine the location of a linear magnet 112 configured to traverse axially, along an axis 103 of the rotating member 101 coupled with a rotary magnet 116 and sensor 117. The sensor 117 may be a rotary sensor. The printed circuit board (PCB) 106, based on the information from the transducers 114, determines the number of turns 113 made by the rotating member 101. The Hall effect sensor 102 can then output the number of turns, for example, to a display 110 that shows the number of turns made by the rotating member 101. The Hall effect sensor 102, or a transmitter (not shown) operationally connected to an output thereof, can alternately transmit a representation of the number of turns via a wired, wireless, or optical communications medium, to a device, e.g., computer, server, handheld device, configured to receive and process the representation in a way understood in the art.

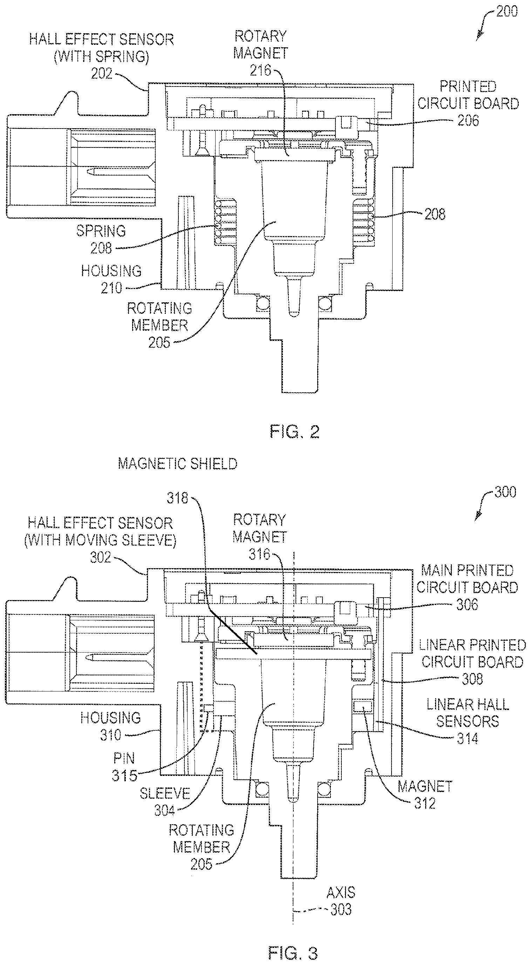

Fig. 2 is a block diagram 200 illustrating an example embodiment of a traditional Hall effect sensor 202 that includes a spring 208. The traditional Hall effect sensor 202 includes a printed circuit board 206 configured to determine angular rotation of a to-be-sensed rotating member 205 within a housing 210 from a rotary magnet 216. The printed circuit board 206 includes a Hall effect sensor configured to detect the movement of the rotating member 205 by detecting the rotary magnet 216. The housing 210 further includes the spring 208 that is configured to apply pressure to the rotating member 205. The pressure causes the rotating member 205 to be limited to a single turn, in embodiments where the Hall effect sensor 202 does not track multiple turns of the rotating member 205.

Fig. 3 is a block diagram 300 illustrating the Hall effect sensor 302 with a moving sleeve according to an example embodiment of the present invention. The Hall effect sensor 302 includes a mother printed circuit board 306, similar to the printed circuit board 206 of Fig. 2, coupled with a daughter printed circuit board 308 (e.g., a linear printed circuit board) of Fig. 3, which is configured to track multiple turns of the rotating member 205. A housing 310 contains both printed circuit boards 306 and 308. The housing 310 can be similar to the housing 210 of Fig. 2; however, the housing 310 includes a bored-out hole to house the linear printed circuit board 308. The linear printed circuit board 308 includes a plurality of linear hall sensors 314. In one embodiment, six linear Hall effect sensors 314 are coupled to the linear printed circuit board 308; however, any number of linear Hall effect sensors 314 or transducers can be employed. The Hall effect sensor 302 further includes a sleeve 304 around the rotating member 205. The sleeve 304 is configured to travel axially along the rotating member 205 in response to rotation of the rotating member 205. The sleeve is further configured to have complementary retaining members, such as a pin 315, to keep the sleeve 304 in place rotationally relative to the rotating member 205. Keeping the sleeve 304 in place rotationally allows a magnet 312 that is coupled to the sleeve 304 to remain at a same distance relative to the plane of the linear Hall effect sensors 314. The magnet 312, along with the sleeve 304, travels parallel to the axis 303 of the rotating member 205 and the linear Hall effect sensors 314.

According to the invention, the Hall effect sensors 302 include a magnetic shield 318 that shields the linear Hall effect sensors 314 from interference from the rotating magnet 316 of the Hall effect sensor 302. Also the mother printed circuit board 306 and/or daughter linear printed circuit board 308 can calculate and eliminate the interference from the permanent magnet 316 and accurately determine the number of turns made by the rotating member 205.

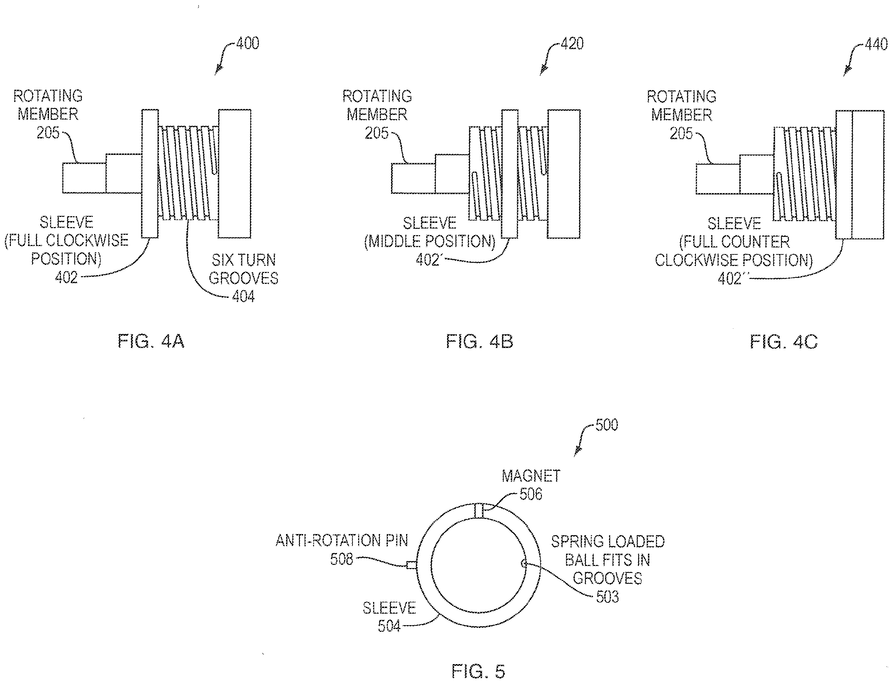

Fig. 4A is a block diagram 400 illustrating an example embodiment of the rotating member 205 with a sleeve 402 in a full clockwise position. In one embodiment, the rotating member 205 includes six turn grooves 404; however, any number of turn grooves can be employed. The sleeve 402 is engaged along those grooves 404 such that when the rotating member is turned clockwise, the sleeve 402 is in the full clockwise position.

Fig. 4B is a block diagram 420 illustrating an example embodiment of the rotating member 205 with a sleeve 402' in a middle position. The sleeve 402', in Fig. 4B, has moved axially along the rotating member 205 to be between a full clockwise position and a full counterclockwise position.

Fig. 4C is a block diagram 440 illustrating another example embodiment of the rotating member 205 with a sleeve 402" in a full counter clockwise position. The sleeve 402" is in a full counterclockwise position.

Fig. 5 is a block diagram 500 illustrating an example embodiment of a sleeve 504. The sleeve 504 includes an anti-rotation pin 508. An anti-rotation pin 508 is an example of a retaining member that can be coupled with the housing to maintain a rotational alignment of the sleeve 504 relative to the rotating member 205. This arrangement keeps a magnet 506 (e.g., a linear magnet) coupled to the sleeve 504 in a rotationally constant position as the sleeve 504 travels axially along the rotating member 205. The sleeve 504 can further include a spring-loaded ball 503 that fits in the grooves of the rotating member. The spring-loaded ball 503 prevents the sleeve from falling off the rotating member at the end of the full clockwise position.

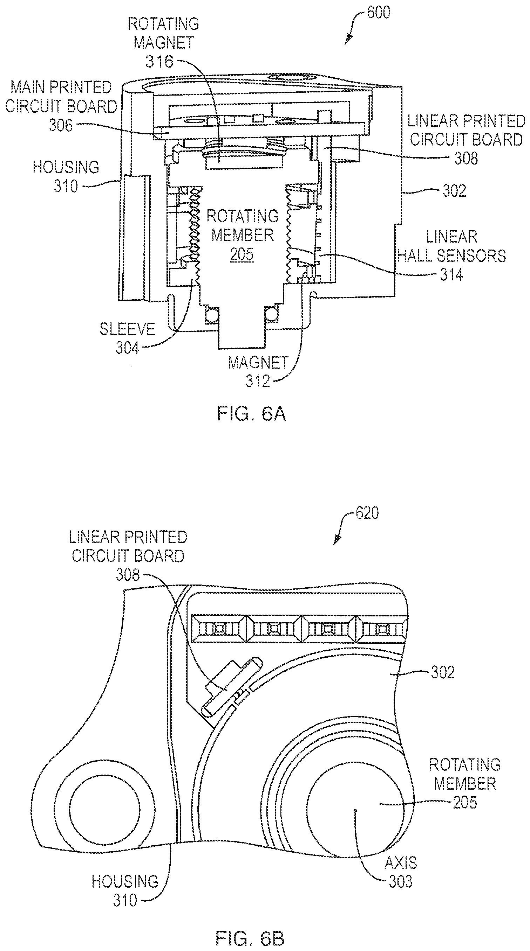

Fig. 6A is a block diagram 600 illustrating a cross-section of a Hall effect sensor 302 employed by an embodiment of the present invention. The Hall effect sensor 302 includes a housing 310 holding a rotating member 205, a mother printed circuit board 306, and a daughter printed circuit board 308. The linear Hall effect sensors 314 detect the position of the magnet 312 as the sleeve 304 travels axially along the rotating member 205. The linear printed circuit board 308 combines the information collected by the linear Hall effect sensors 314 so that the mother printed circuit board 306 and daughter printed circuit board 308 can calculate the number of turns the rotating member 205 has made.

Fig. 6B is a block diagram 620 illustrating a top-down view of a cross section of the Hall effect 302 sensor employed by an embodiment of the present invention. The Hall effect sensor 302 includes the housing 310, the rotating member 205, and the linear printed circuit board 308. The linear print circuit board 308 is located in a hole drilled or bored through a housing 310 that is parallel to an axis 303 of the rotating member 205.

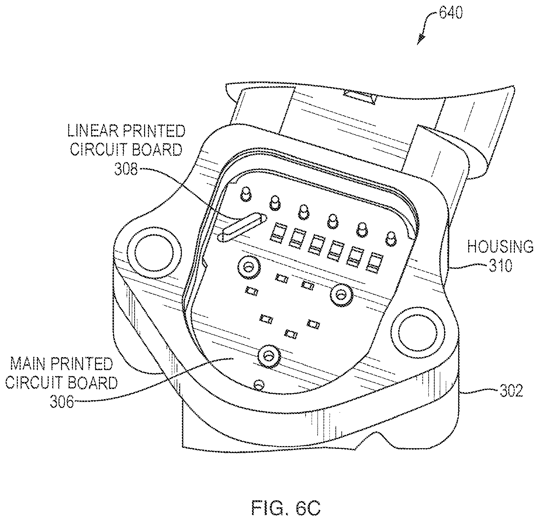

Fig. 6C is a block diagram 640 illustrating an example embodiment of the present invention from another top view illustrating a cross-section of the Hall effect sensor 302. The Hall effect sensor 302 includes the housing 310, the mother printed circuit board 306, and the daughter printed circuit board 308, where the daughter printed circuit board is coupled to the mother printed circuit board 306. The rotating member 205, shown in Figs. 6A and 6B, is located beneath the main printed circuit board 306 in Fig. 6C.

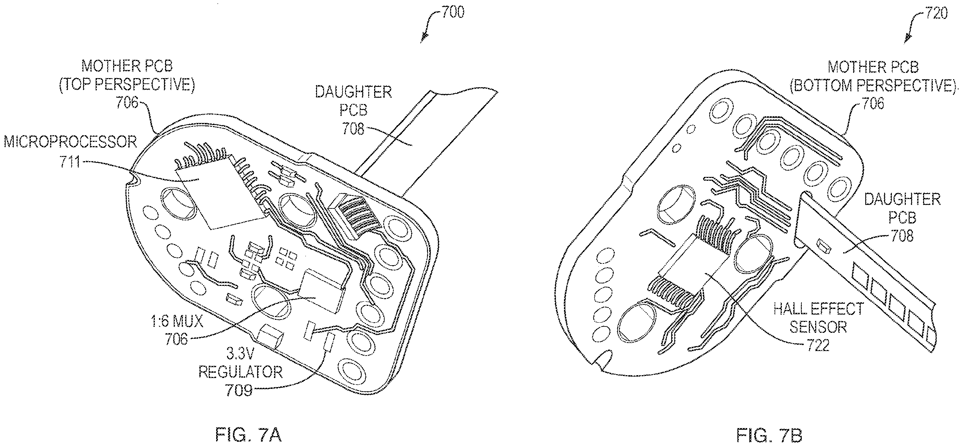

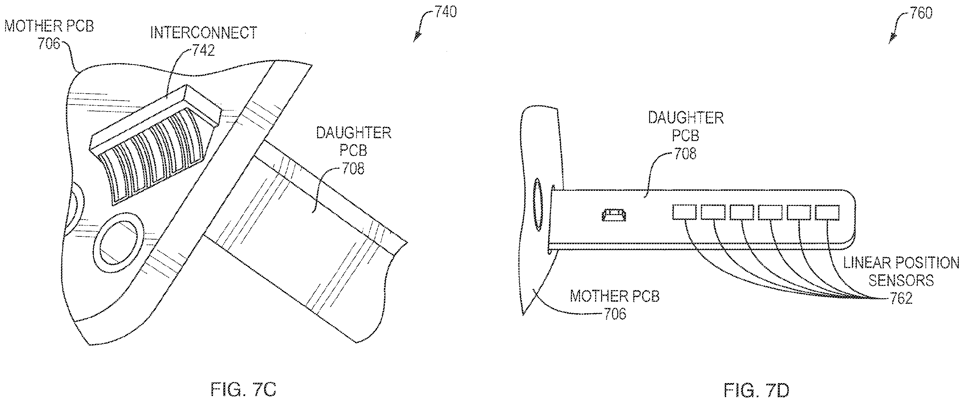

Fig. 7A is a block diagram 700 illustrating an example embodiment of a mother printed circuit board 706 from a top perspective and a daughter printed circuit board 708. The mother printed circuit board 706 includes a microprocessor 711, a multiplexer 706, which can be a 1-to-6 multiplexer, and a 3.3 volt regulator 709. A person of ordinary skill in the art can recognize that the microprocessor 711, multiplexer 706, and voltage regulator 708 can be of different varieties. The multiplexer 706 can select among the six linear sensors (e.g., linear position sensors 762 of Fig. 7D) of the daughter printed circuit board 708. In another embodiment, with a different number of linear transducers on the daughter printed circuit board 704, the multiplexer 706 can be a different type of multiplexer. The microprocessor 711 is configured to determine, based on outputs of the linear transducers forwarded to the microprocessor 711, the number of turns made by the rotating member (not shown).

Fig. 7B is a block diagram 720 illustrating an example embodiment of the mother printed circuit board 706 from a bottom perspective. The mother printed circuit board 706 is mounted to the daughter print circuit board 708 at a right angle, and includes a Hall effect sensor 722. The Hall effect sensor 722, for example, can be a commercially available CMOS Hall effect sensor. The Hall effect sensor 722 can detect the angular position of a magnet (not shown), such as the permanent magnet coupled to the rotating member (not shown).

Fig. 7C is a block diagram 740 illustrating an example embodiment of an interconnect 742 between the mother printed circuit board 706 and the daughter printed circuit board 708. The interconnect 742 is an example of a coupling used to connect the daughter printed circuit board 708 to the mother printed circuit board 706 by solder connections to the mother printed circuit board 706.

Fig. 7D is a block diagram 760 illustrating another example embodiment of the daughter printed circuit board 708 coupled with the mother print circuit board 706. The daughter printed circuit board 708 includes a plurality of linear position sensors 762. The linear position sensors 762 can be, for example, the commercially available linear position sensors or custom manufactured linear position sensors. The linear position sensors 762 can determine absolute position of a linear movement of a magnet, such as the linear magnet (not shown) on the sleeve (not shown) in the embodiment of the present Hall effect sensor illustrated in Figs. 3-6C. The absolute position can correlate to the number of turns of the rotating member. In the embodiment of Fig. 7D, six linear position sensors are employed; however, any number can be employed to detect a greater or fewer number of turns of the rotating member.

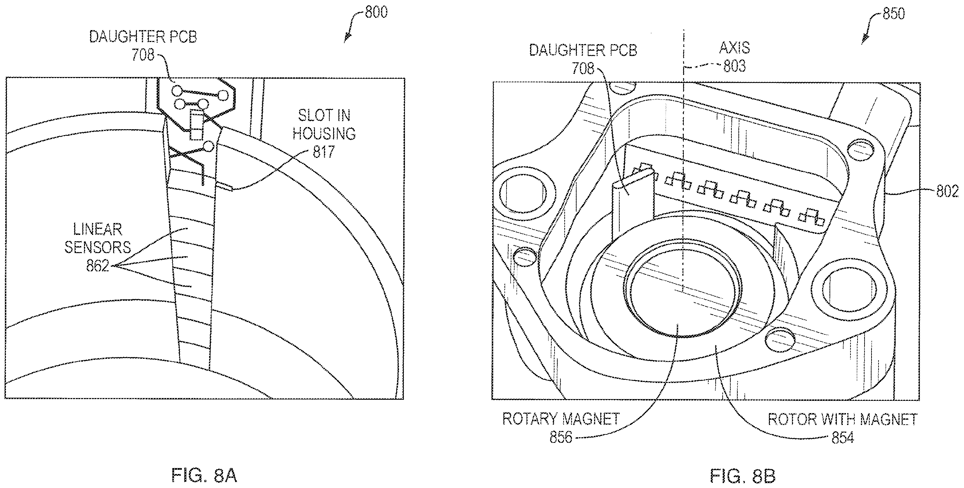

Fig. 8A is a diagram 800 illustrating an example embodiment of the daughter printed circuit board 708 shown in a slot 817 in the housing. The daughter printed circuit board 708 includes the linear sensors 862 which are arranged parallel to the axis of the rotating member along the slot 817 in the housing.

Fig. 8B is a diagram 850 illustrating an example embodiment of the Hall effect sensor 802 in its housing. The Hall effect sensor includes the daughter printed circuit board 708, which is parallel to the axis 803 of a rotor 854 with a rotary magnet 856.

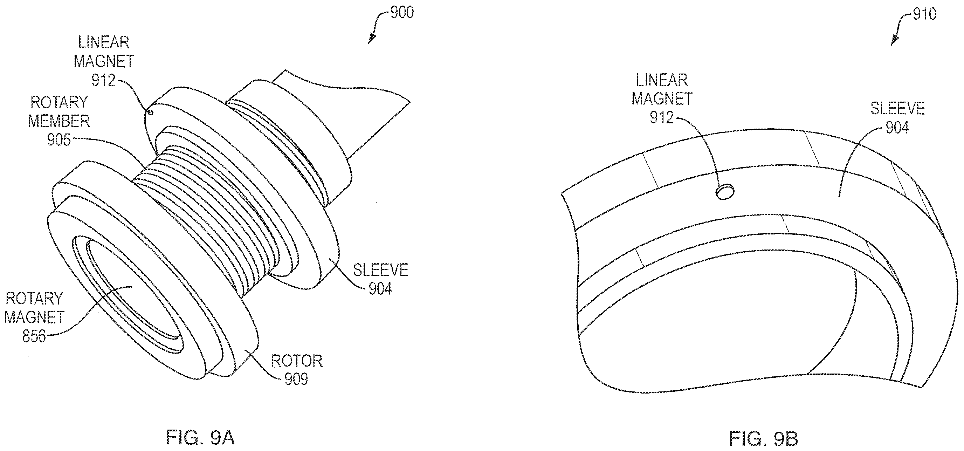

Fig. 9A is a block diagram 900 illustrating an example embodiment of the rotating member 905 including a sleeve 904 employed by the present invention. The sleeve 904 includes a linear magnet 912. The sleeve 904 is also configured to complement threads of a rotor 909 such that it can grip the rotating member 905. The rotating member 905 further includes the rotary magnet 856 to determine angular position of the rotating member 905. The linear magnet 912 is arranged to determine vertical position, and therefore the number of turns, of the rotating member 905.

Fig. 9B is a block diagram 910 illustrating an example embodiment of the sleeve 904. The sleeve includes a linear magnet 912. The position of the linear magnet 912, as described above, is configured to be detected by the linear position sensors of daughter printed circuit board (not shown) to determine the number of turns that the rotating member has made.

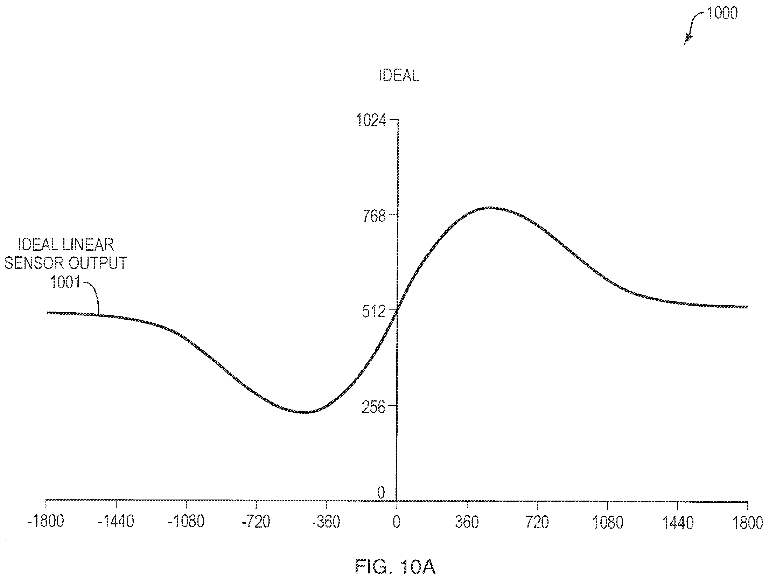

Fig. 10A is a graph 1000 illustrating an example embodiment of an ideal linear sensor output. The ideal linear sensor output 1001 is the output of a linear sensor without interference from magnets, a Hall effect sensor, other linear sensors, or other sources of interference. The large rotary magnet and sensor output determine the position of the rotor between 0 and 360 degrees. The multiple linear sensors, however, detect the position of a much smaller, secondary magnet in the sleeve to determine how many times the sensor has rotated. In one embodiment, the vertical axis in Fig. 10A represents the digital output from a 10-bit Hall effect sensor with a zero field value of 512 counts and an amplitude of 512 on either side, depending on magnetic polarity. However, a person of ordinary skill in the art can recognize that the Hall effect sensor can have different zero field values and amplitudes.

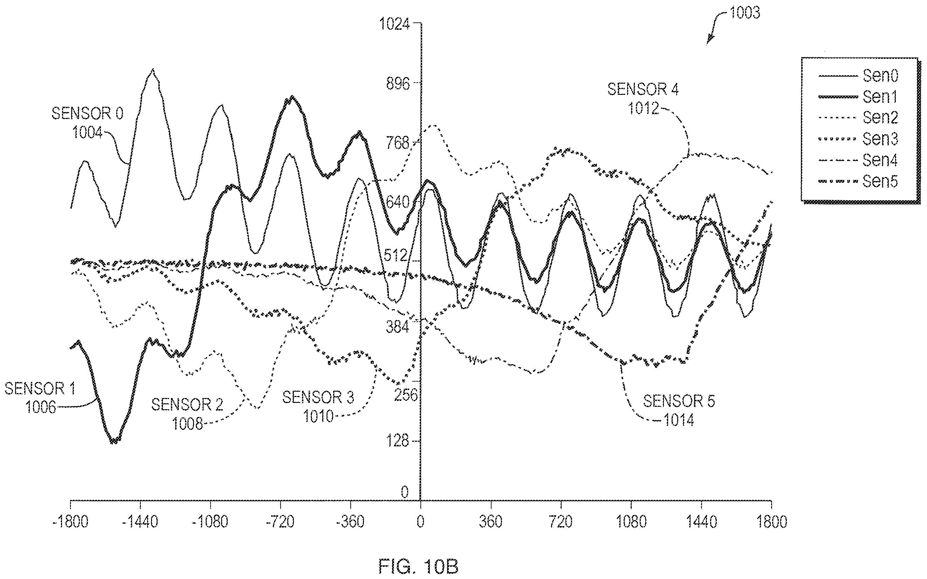

Fig. 10B is a graph 1003 illustrating example embodiments of linear sensor output from the linear printed circuit board over ten turns of the rotor (e.g., 3600 degrees of rotation). In general, a sensor closer to the rotary magnet receives higher interference from the rotary magnet than a sensor further away from the rotary magnet. In certain embodiments, a magnetic shield can protect the linear sensors from such interference. However, methods can be employed to determine, based on information from all of the sensors (e.g., sensors zero through five), and eliminate such interference and accurately determine the turn count of the rotating member. For example, sensor 0 1004 receives high interference because it is the closest to the rotary magnets. Sensor 1 1006 also includes high interference because it is the second closest to the magnet. Sensor 5 1014 is furthest away and has almost no interference from the larger magnet. Each wave output of each sensor, however, has ten sine wave peaks per output since the rotor turns ten times.

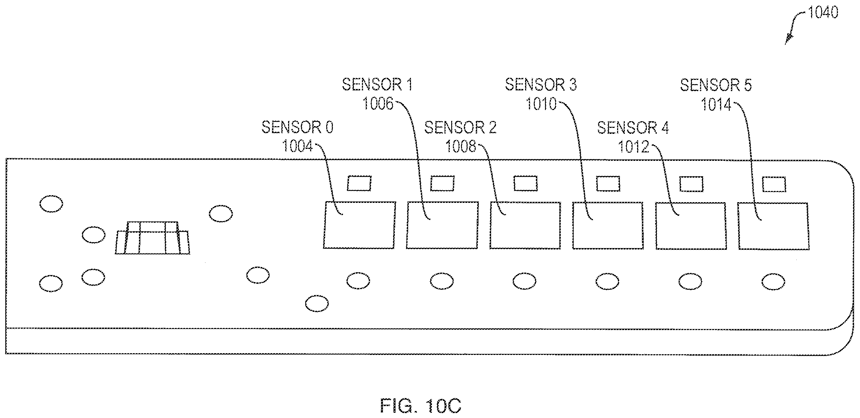

Fig. 10C is a block diagram 1040 illustrating the orientation of the plurality of sensors. The sensor 0 1004 is closest to the rotary magnet followed by sensor 0 1004, sensor 1 1006, sensor 2 1008, sensor 3 1010, sensor 4 1012, sensor 5 1014.

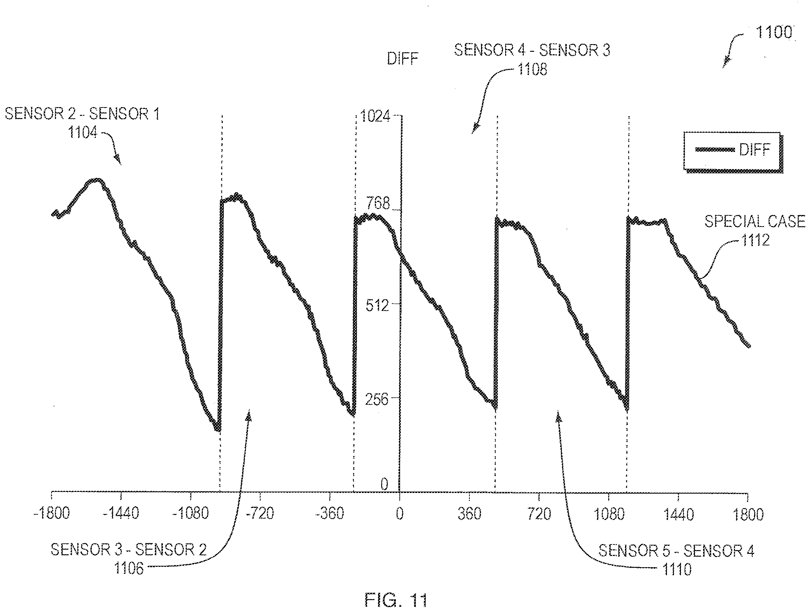

Fig. 11 is a graph 1100 illustrating an example embodiment of differences between the sensors, which is a property employed to reduce the interference of the rotary magnet. In different sections of the graph, differences are calculated to reduce interference. For example, on the leftmost portion of the graph the difference of sensor two and sensor one 1104 is calculated. Moving rightward, the difference of sensor three and sensor two 1106 is calculated, followed by the difference of sensor four and sensor three 1108, and then the difference of sensor five and sensor four 1110. On the rightmost portion of the graph is a special case 1112 that represents the area where there is no higher sensor to subtract. The difference value is derived by using the difference between two sensors, which eliminates sine wave interference from the position information and provides a means to determine the correct turn. Whenever a sensor has a maximum value (as shown in Fig. 10B), the difference between two succeeding sensors can be calculated. For example, when sensor zero has a maximum value, the difference is calculated from sensor 2 and sensor 1. When sensor 4 has the maximum value, a special case is calculated since there is only one successive sensor because sensor 5 is the only available sensor higher numbered, as there is no sensor 6 in this embodiment.

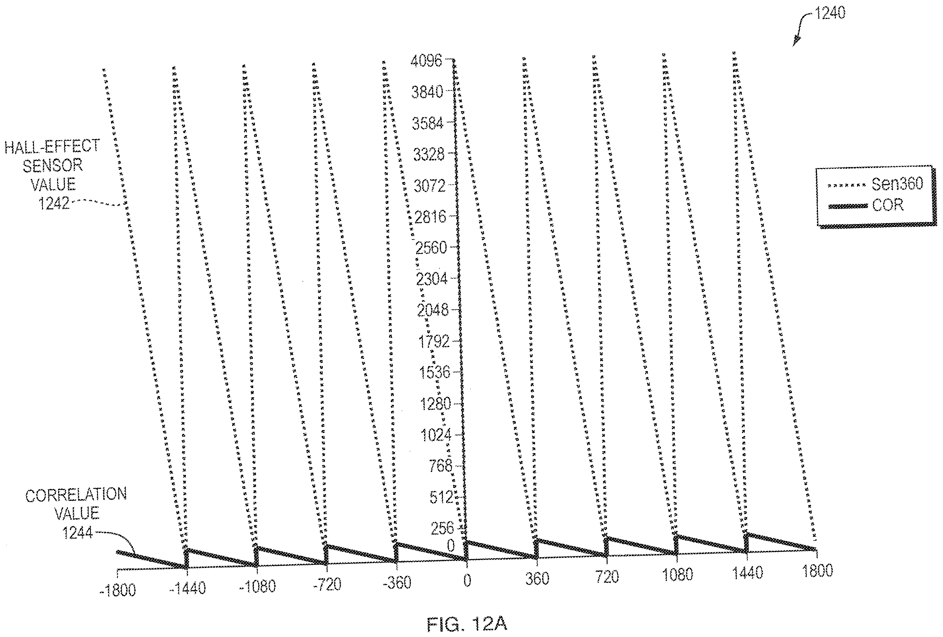

Fig. 12A is a graph 1240 illustrating a Hall effect sensor value 1242 and a corresponding correlation value 1244. In addition to the difference value, a correlation value is a scaled version of the Hall effect sensor value 1242 (e.g., the main 360 degree sensor). The correlation value is the value of the main sensor divided by 30, in one embodiment, and is used to determine the turn number. In one embodiment, the vertical axis in Fig. 12A represents a digital output from a 12-bit rotary Hall effect sensor. The value of the 12-bit rotary Hall effect sensor varies from zero to 4096, the values corresponding to a rotation from zero to 360 mechanical degrees (or zero to two pi radians). The output repeats ten times for ten turns of the rotor. A person of ordinary skill in the art can recognize that a rotary Hall effect sensor of other resolutions can be employed.

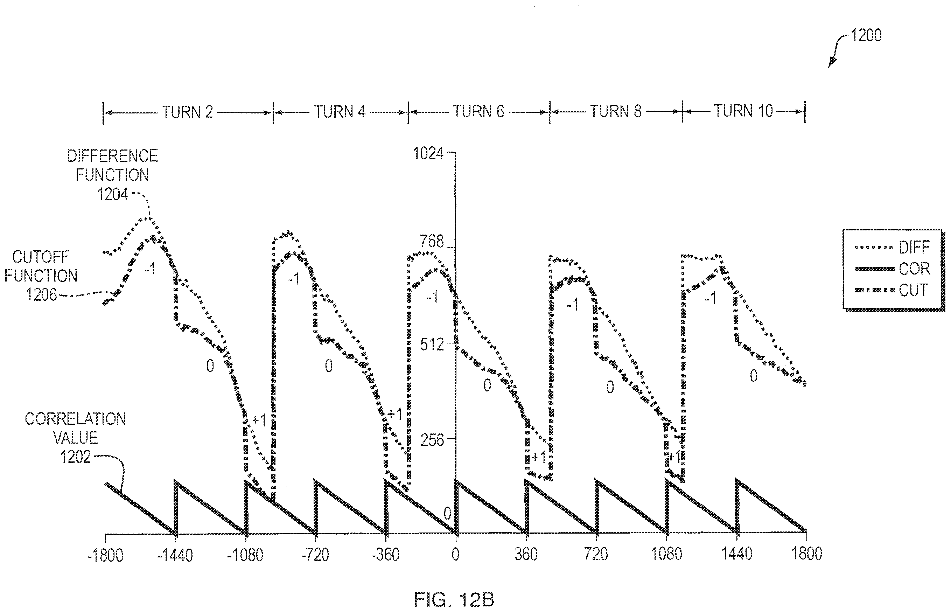

Fig. 12B is a graph 1200 illustrating a hall function that indicates when the Hall effect sensor has made a complete turn. The cutoff function 1206 corresponds with the correlation value 1202 which indicates the true turning of the Hall effect sensor. The cutoff function is calculated by subtracting the correlation value 1202 from the difference value 1204. The cutoff function, every time there is a discontinuity, can determine that a turn has been made and can increase or decrease the count based on the discontinuity.

The cutoff function 1206 is designed to have discontinuities at the same position of the Hall effect sensor. The discontinuities synchronize the value of the correct turn to the Hall effect sensor and provides for variation in the linear sensors. The final value for the correct turn of the sensor is 2, 4, 6, 8, 10 for each sensor 0, 1, 2, 3, and 4, respectively. This is then modified by the cutoff function 1206. If the cutoff function 1206 is above 600, then 1 is subtracted from a turn value, but if the cutoff function 1206 is less than 250, 1 is added to the turn value.

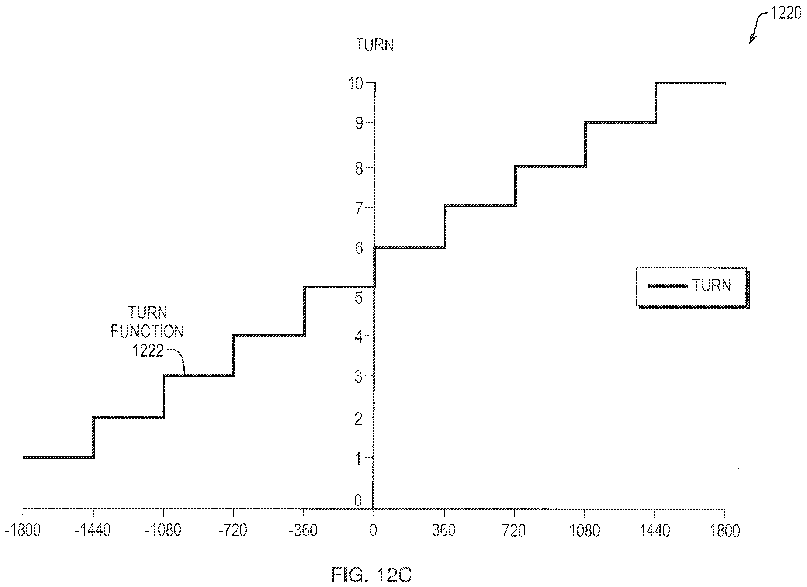

Fig. 12C is a graph 1220 illustrating a turn function 1222. The turn function increases by one for 360 degree turn of the Hall effect sensor. In one embodiment, the value of the turn function 1222 is multiplied by the number of counts per turn (e.g., 4096) and combined with the output of the Hall effect sensor to provide a full ten turn output that retains accuracy and resolution of the Hall effect sensor.

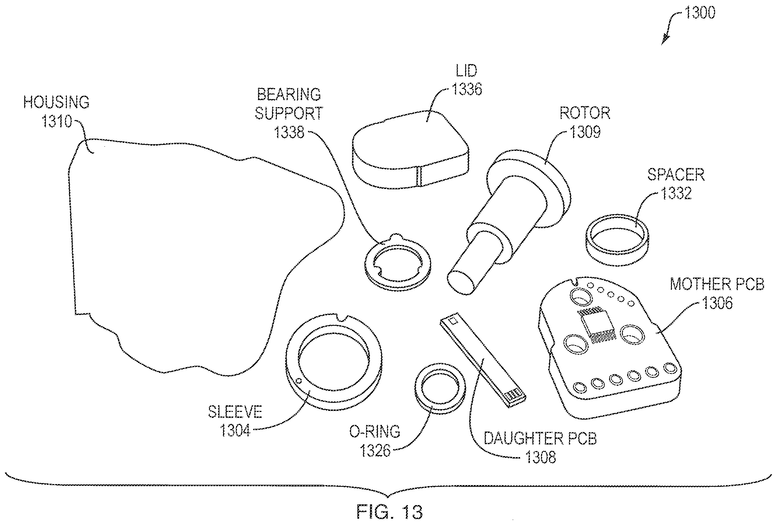

Fig. 13 is a block diagram 1300 illustrating the parts involved in making the Hall effect sensor according to an embodiment of the present invention. The Hall effect sensor includes a housing 1310, a sleeve 1304, an O-ring 1326 and a bearing support 1338. The housing further can include a lid 1336. A rotor 1309 is mounted in the housing 1310 and includes the rotary magnet. The rotor 1309 can further be employed to hold the bearing support 1338, the spacer 1332, the O ring 1326, and the sleeve 1304, which includes the linear magnet. The mother printed circuit board 1306 and daughter printed circuit board 1308 are configured to be mounted to each other and detect the position of the rotary magnet of the rotor and the linear magnet of the sleeve as the rotating member rotates.

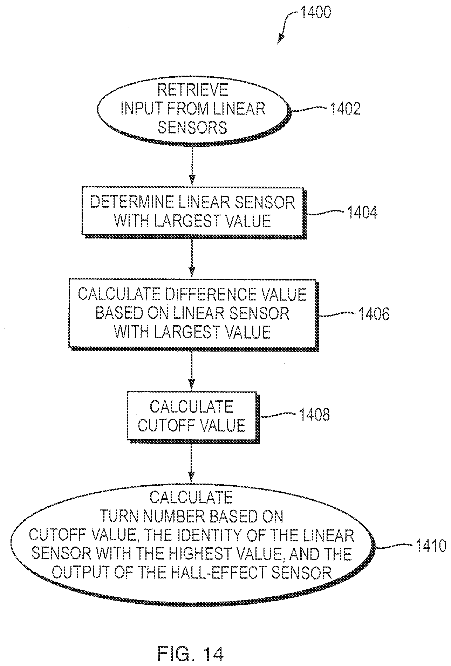

Fig. 14 is a flow diagram 1400 illustrating an example embodiment of a process employed by an example embodiment of the present invention. The embodiment of the process employs six linear sensors. Each of the linear sensors can be 10-bit devices, which have output values ranging from 0 to 1023. The process further employs one rotary Hall effect sensor. A rotary Hall effect sensor may also be referred to interchangeably herein as a "rotary sensor," "rotary hall sensor," or "sensor$_H$." The rotary sensor is a 12 bit device, with values ranging from 0 to 4095. The sensor 117 of FIG. 1 may be an example of a rotary sensor. The final result has 10 times the resolution of the rotary hall sensor, which means the final output ranges from 0 to 40959.

The process starts by retrieving input from the linear sensors (1402). Then, the process determines the linear sensor with the largest output value (1404). The process does this by cycling through all of the sensors, reading their respective values, and determining the largest output value of the sensor after all sensors have been cycled through.

The process then calculates a difference value based on the linear sensor with the largest value (1406). If the linear sensor with the largest value is any sensor other than the second to last sensor (e.g., sensor 4), the process calculates a difference value of the next two highest indexed sensors and adds a constant (e.g., 600). The last sensor (e.g., sensor 5 as shown in Fig. 10B) is shown not to have the largest value at any point. For example, if the third sensor has the highest value, the system subtracts the output of the fifth sensor from the output of the fourth sensor, and adds the constant. On the other hand, if the largest value is the second to last sensor (e.g., sensor 4), the difference value is the difference of a constant (e.g., 1040) and the last sensor (e.g., sensor 5).

Then, the process calculates a cutoff value (1408). First, the process calculates a correlation value equal to the value of the rotary Hall effect sensor divided by 30. Then, the system calculates the cutoff value by subtracting the correlation value from the difference value.

The process calculates a turn number based on the cutoff value, the identity of the linear sensor with the highest value, and the output of the Hall effect sensor (1410). It should be understood that the term "identity" may also be used herein as meaning an identifier of the sensor, such as an index, positional value, or position, wherein the index, positional value, or position associated with the sensor.

If the calculated cutoff value is greater than 600, then the process calculates a turn value of

$$Turn = 2\,X\,(Sensor\ Number + 1) - 1\,.$$

If the calculated cutoff value is between 250 and 600, the process calculates a turn value of

$$Turn = 2\,X\,(Sensor\ Number + 1)$$

If the calculated cutoff value is less than 250, then the process calculates a turn value of

$$Turn = 2\,X\,(Sensor\ Number + 1) + 1$$

After calculating the turn value, the system determines an output value of

$$Output = 4096 \, X \, Turn - Rotary \, Hall \, Effect \, Sensor \, Output$$

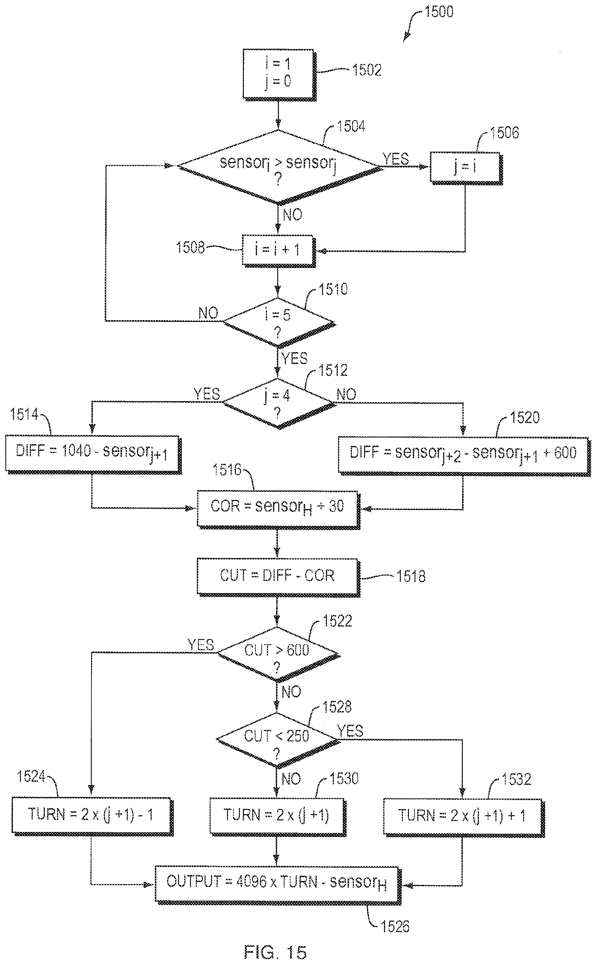

Fig. 15 is a flow diagram 1500 illustrating an example embodiment of a method used to implement the process of Fig. 14. In this embodiment, the linear sensors each correspond with an ordered index, the index of the linear sensor indicating its position. In this embodiment, there are six linear sensors, but the method can be modified to be employed with a different number of linear sensors. The method determines the sensor with a largest output value and calculates a difference value based on a sensor or sensors next to the sensor with the largest output value. The method then calculates a cutoff value based on the difference value and a correlation value that is itself based on the output of the Hall sensor. The method then calculates a turn value based on a range that the cutoff value is in, and calculates an output value representing the absolute angular position of the rotating member based on the turn value and output of the Hall effect sensor.

It should be understood that the term "sensor" may refer to the sensor itself, an output of the sensor, or an identity of the sensor, depending on the context. An identity of the sensor may also be referred to interchangeably herein as an index, positional value, or position, wherein the index, positional value, or position are associated with the sensor.

The method first initializes index $i$ to one and index $j$ to zero (1502). The method determines whether a sensor of index $i$ has a greater output than a sensor of index $j$ (1504). If so, the method sets the index $j$ to the value of the index $i$ (1506) and then increments the index $i$ (1508). The method than determines whether the index $i$ has a value of 5(1510). If not, the method determines whether a sensor of index $i$ has a greater output than a sensor of index $j$ (1504).

If the index $i$ has a value of 5 (1510), the method determines whether the index $j$ has a value of four (1512). If not, the method creates a difference value equal to the output of a sensor with an index of $j + 2$ minus the value of the output of a sensor with an index of $j + 1$, plus a constant of 600 (1520). The method then calculates a correlation value of the output of the Hall sensor divided by a constant of 30 (1516) and calculates a cutoff value equal to the difference value minus the correlation value (1518).

If the index $j$ does have a value of 4, (1514), the method calculates the difference value in a special case, where only one sensor of a higher index is available because a sensor with an index of j+2 is outside of the range of sensors. The method calculates a difference value of a constant of 1040 minus the output of a sensor with an index of $j + 1$. The method then calculates a correlation value of the output of the Hall sensor divided by a constant of 30 (1516) and calculates a cutoff value equal to the difference value minus the correlation value (1518).

The method determines whether the cutoff value is greater than 600 (1522). If so, the method determines a turn value equal to double the value of $j + 1$, minus one. Then the system calculates an output value of 4096 times the turn value minus the value of the output of the Hall sensor (1526).

If the cutoff value is less than or equal to 600 (1522), the method determines whether the cutoff value is less than 250 (1528). If so, the method calculates a turn value equal to double value of $j + 1$ (1530). Then the system calculates an output value of 4096 times the turn value minus the value of the output of the Hall sensor (1526).

If the cutoff value is greater than or equal to 250 (1528), then the method calculates a turn value equal to double the value of $j + 1$, plus one (1532). Then the system calculates an output value of 4096 times the turn value minus the value of the output of the Hall sensor (1526).

While this invention has been particularly shown and described with references to example embodiments thereof, it will be understood by those skilled in the art that various changes in form and details may be made therein without departing from the scope of the invention encompassed by the appended claims.

**Claims**

**1.** A sensor (302) for determining absolute angular position of a rotating member (205), the sensor (302) comprising:

a rotor configured to rotate as a function of rotation of the rotating member (205), the rotor including a first magnet (316) coupled to the rotor and a shaft having threads thereon;
a sleeve (304) including a second magnet (312) and threads complementary to the threads of the shaft, the sleeve (304) configured to travel axially along the shaft as a function of rotation of the rotor **characterized in that** it further comprises;
a first transducer (117) configured to sense orientation of the first magnet (316); and
at least one second transducer (314) configured to sense a location of the second magnet (312) along the shaft; and

a magnetic shield (318) positioned between the first magnet (316) and the second magnet (312).

2. The sensor (302) of Claim 1, further comprising a complimentary retaining pair configured to cause the sleeve (304) to travel axially along the shaft as a function of rotation of the rotor.

3. The sensor (302) of Claim 1, wherein the at least one second transducer (314) includes a plurality of transducers, a first number of transducers being a function of a second number of rotor turns the sensor can count, a sensing length of the sensor, or a combination thereof.

4. The sensor of Claim 3, wherein the first number of the plurality of transducers is six transducers and the second number of turns the sensor can count is ten.

5. The sensor (302) of Claim 1, further comprising a processor configured to convert output from the first transducer (117) and the at least one second transducer (314) to a representation of an absolute angular position of the rotating member (205).

6. The sensor (302) of Claim 1, wherein the sleeve (304) is coupled with a stopping bearing configured to hold the sleeve (304) in association with the threads of the shaft in event of a runout to enable the sleeve (304) to be reassociated with the shaft responsive to reverse turning of the rotor.

7. The sensor (302) of Claim 1, wherein the at least one second transducer (314) is mounted on a printed circuit board.

8. The sensor (302) of Claim 7, wherein the printed circuit board is a daughter printed circuit board (308) that is mounted to a mother circuit board at a perpendicular angle, the first transducer (117) being coupled to the mother circuit board.

9. A method for determining absolute angular position of a rotating member (205) with a sensor (302), the method comprising:

   rotating a rotor as a function of rotation of the rotating member (205), the rotor including a first magnet (316) coupled to the rotor and a shaft having threads thereon;
   travelling axially a sleeve (304) along the shaft as a function of rotation of the rotor, the sleeve (304) including a second magnet (312) and threads complementary to the threads of the shaft; **characterized by** positioning a magnetic shield (318) between the first magnet (216) and the second magnet (312); sensing orientation of the first magnet (316) at a first transducer (117); and
   sensing location of the second magnet (312) along the shaft by at least one second transducer (314).

10. The method of Claim 9, further comprising causing the sleeve (304) to travel axially along the shaft as a function of rotation of the rotor by a complimentary retaining pair.

11. The method of Claim 9, further comprising determining a first number of a plurality of transducers as a function of a second number of rotor turns the sensor (302) can count, a sensing length of the sensor (302), or a combination thereof, wherein the at least one second transducer (314) includes the plurality of transducers determined.

12. The method of Claim 9, wherein the first number of the plurality of transducers determined is six transducers and the second number of turns the sensor (302) can count is ten.

13. The method of Claim 9, further comprising converting, at a processor, output from the first transducer (117) and the at least one second transducer (314) to a representation of an absolute angular position of the rotating member (205).

14. The method of Claim 9, further comprising coupling the sleeve (304) with a stopping bearing configured to hold the sleeve (304) in association with the threads of the shaft in event of a runout to enable the sleeve (304) to be reassociated with the shaft responsive to reverse turning of the rotor.

15. The method of Claim 9, further comprising mounting the at least one second transducer (314) on a printed circuit board.

**EP 3 025 126 B1**

**Patentansprüche**

1. Sensor (302) zum Bestimmen der absoluten Winkelposition eines rotierenden Elements (205), wobei der Sensor (302) umfasst:

   einen Rotor, der konfiguriert ist, um sich als eine Funktion der Rotation des rotierenden Elements (205) zu drehen, wobei der Rotor einen ersten Magneten (316) aufweist, der mit dem Rotor gekoppelt ist und eine mit Gewindegängen versehene Welle aufweist;
   eine Hülse (304), die einen zweiten Magneten (312) und zu den Gewindegängen der Welle komplementäre Gewindegänge aufweist, wobei die Hülse (304) konfiguriert ist, um sich als eine Funktion der Rotation des Rotors axial entlang der Welle zu bewegen, **dadurch gekennzeichnet, dass** sie ferner aufweist:

   einen ersten Wandler (117), der konfiguriert ist, um die Orientierung des ersten Magneten (316) zu erfassen; und
   und mindestens einen zweiten Wandler (314), der konfiguriert ist, um eine Position des zweiten Magneten (312) entlang der Welle zu erfassen; und
   eine magnetische Abschirmung (318), die zwischen dem ersten Magneten (316) und dem zweiten Magneten (312) angeordnet ist.

2. Sensor (302) nach Anspruch 1, ferner aufweisend ein komplementäres Haltepaar, das konfiguriert ist, um als eine Funktion der Rotation des Rotors eine axiale Bewegung der Hülse (304) entlang der Welle zu bewirken.

3. Sensor (302) nach Anspruch 1, wobei der mindestens eine zweite Wandler (314) mehrere Wandler umfasst, wobei eine erste Anzahl von Wandlern eine Funktion einer zweiten Anzahl von Rotorumdrehungen ist, die der Sensor zählen kann, einer Erfassungslänge des Sensors oder einer Kombination davon.

4. Sensor nach Anspruch 3, wobei die erste Anzahl der mehreren Wandler sechs und die zweite Anzahl von Umdrehungen, die der Sensor zählen kann, zehn beträgt.

5. Sensor (302) nach Anspruch 1, ferner aufweisend einen Prozessor, der konfiguriert ist, um eine Ausgabe vom ersten Wandler (117) und dem mindestens einen zweiten Wandler (314) in eine Darstellung einer absoluten Winkelposition des rotierenden Elements (205) umzuwandeln.

6. Sensor (302) nach Anspruch 1, wobei die Hülse (304) mit einem Anschlaglager verbunden ist, das konfiguriert ist, um die Hülse (304) in Verbindung mit den Gewindegängen der Welle im Fall eines Rundlauffehlers zu halten, um zu ermöglichen, dass die Hülse (304) erneut die für die Rückdrehung des Rotors zuständige Welle zuordnet.

7. Sensor (302) nach Anspruch 1, wobei der mindestens eine zweite Wandler (314) auf einer gedruckten Leiterplatte montiert ist.

8. Sensor (302) nach Anspruch 7, wobei die Leiterplatte eine Tochterleiterplatte (308) ist, die in einem senkrechten Winkel an einer Mutterleiterplatte angebracht ist, wobei der erste Wandler (117) mit der Mutterleiterplatte verbunden ist.

9. Verfahren zum Bestimmen der absoluten Winkelposition eines rotierenden Elements (205) mit einem Sensor (302), wobei das Verfahren umfasst:

   Drehen eines Rotors als eine Funktion der Rotation des rotierenden Elements (205), wobei der Rotor einen ersten Magneten (316), der mit dem Rotor verbunden ist, und eine mit Gewindegängen versehene Welle aufweist;
   axiales Bewegen einer Hülse (304) entlang der Welle als eine Funktion der Rotation des Rotors, wobei die Hülse (304) einen zweiten Magneten (312) und zu den Gewindegängen der Welle komplementäre Gewindegänge umfasst;
   **gekennzeichnet durch** Positionieren einer magnetischen Abschirmung (318) zwischen dem ersten Magneten (216) und dem zweiten Magneten (312);
   Erfassen der Ausrichtung des ersten Magneten (316) an einem ersten Wandler (117); und
   Erfassen der Position des zweiten Magneten (312) entlang der Welle durch mindestens einen zweiten Wandler (314).

**10.** Verfahren nach Anspruch 9, ferner umfassend Bewirken, dass sich die Hülse (304) axial entlang der Welle als eine Funktion der Rotation des Rotors durch ein komplementäres Haltepaar bewegt.

**11.** Verfahren nach Anspruch 9, ferner umfassend Bestimmen einer ersten Anzahl von mehreren Wandlern als eine Funktion einer zweiten Anzahl von Rotorumdrehungen, die der Sensor (302) zählen kann, einer Erfassungslänge des Sensors (302) oder einer Kombination davon, wobei der mindestens eine zweite Wandler (314) die bestimmten mehreren Wandler umfasst.

**12.** Verfahren nach Anspruch 9, wobei die erste Anzahl der mehreren bestimmten Wandler sechs Wandler ist und die zweite Anzahl der Windungen, die der Sensor (302) zählen kann, zehn ist.

**13.** Verfahren nach Anspruch 9, ferner umfassend Umwandeln, an einem Prozessor, einer Ausgabe vom ersten Wandler (117) und dem mindestens einen zweiten Wandler (314) in eine Darstellung einer absoluten Winkelposition des rotierenden Elements (205).

**14.** Verfahren nach Anspruch 9, ferner umfassend Verbinden der Hülse (304) mit einem Anschlaglager, das konfiguriert ist, um die Hülse (304) in Verbindung mit den Gewindegängen der Welle im Fall eines Rundlauffehlers zu halten, um zu ermöglichen, dass die Hülse (304) erneut die für die Rückdrehung des Rotors zuständige Welle zuordnet.

**15.** Verfahren nach Anspruch 9, ferner umfassend Montage des mindestens einen zweiten Wandlers auf einer gedruckten Leiterplatte.

## Revendications

**1.** Capteur (302) pour déterminer la position angulaire absolue d'un élément rotatif (205), le capteur (302) comprenant :

un rotor configuré pour tourner en fonction de la rotation de l'élément rotatif (205), le rotor comprenant un premier aimant (316) couplé au rotor et un arbre ayant des filetages sur ce dernier ;
un manchon (304) comprenant un second aimant (312) et des filetages complémentaires des filetages de l'arbre, le manchon (304) étant configuré pour se déplacer axialement le long de l'arbre en fonction de la rotation du rotor, **caractérisé en ce qu'**il comprend en outre :

un premier transducteur (117) configuré pour détecter l'orientation du premier aimant (316) ; et
au moins un second transducteur (314) configuré pour détecter un emplacement du second aimant (312) le long de l'arbre ; et
une protection magnétique (318) positionnée entre le premier aimant (316) et le second aimant (312).

**2.** Capteur (302) selon la revendication 1, comprenant en outre une paire de retenues complémentaires configurée pour amener le manchon (304) à se déplacer axialement le long de l'arbre en fonction de la rotation du rotor.

**3.** Capteur (302) selon la revendication 1, dans lequel le au moins un second transducteur (314) comprend une pluralité de transducteurs, un premier nombre de transducteurs dépendant d'un second nombre de tours de rotor que le capteur peut compter, d'une longueur de détecteur du capteur ou de leur combinaison.

**4.** Capteur selon la revendication 3, dans lequel le premier nombre de la pluralité de transducteurs est de six transducteurs et le second nombre de tours que le capteur peut compter est de dix.

**5.** Capteur (302) selon la revendication 1, comprenant en outre un processeur configuré pour convertir le résultat du premier transducteur (117) et du au moins un second transducteur (314) en une représentation d'une position angulaire absolue de l'élément rotatif (205).

**6.** Capteur (302) selon la revendication 1, dans lequel le manchon (304) est couplé à un palier de butée configuré pour maintenir le manchon (304) en association avec les filetages de l'arbre en cas de déformation pour permettre au manchon (304) d'être à nouveau associé à l'arbre en réponse à la rotation en sens inverse du rotor.

**7.** Capteur (302) selon la revendication 1, dans lequel le au moins un second transducteur (314) est monté sur une carte de circuit imprimé.

**8.** Capteur (302) selon la revendication 7, dans lequel la carte de circuit imprimé est une carte de circuit imprimé fille (308) qui est montée sur une carte de circuit imprimé mère à un angle perpendiculaire, le premier transducteur (117) étant couplé à la carte de circuit imprimé mère.

**9.** Procédé pour déterminer la position angulaire absolue d'un élément rotatif (205) avec un capteur (302), le procédé comprenant :

la rotation d'un rotor en fonction de la rotation de l'élément rotatif (205), le rotor comprenant un premier aimant (316) couplé au rotor et un arbre ayant des filetages sur ce dernier ;
le déplacement axial d'un manchon (304) le long de l'arbre en fonction de la rotation du rotor, le manchon (304) comprenant un second aimant (312) et des filetages complémentaires des filetages de l'arbre ; **caractérisé par** :

le positionnement d'une protection magnétique (318) entre le premier aimant (216) et le second aimant (312) ;
la détection de l'orientation du premier aimant (316) au niveau d'un premier transducteur (117) ; et
la détection de l'emplacement du second aimant (312) le long de l'arbre grâce à au moins un second transducteur (314).

**10.** Procédé selon la revendication 9, comprenant en outre l'étape suivante : amener le manchon (304) à se déplacer axialement le long de l'arbre en fonction de la rotation par une paire de retenues complémentaires.

**11.** Procédé selon la revendication 9, comprenant en outre la détermination d'un premier nombre d'une pluralité de transducteurs en fonction d'un second nombre de tours de rotor que le capteur (302) peut compter, d'une longueur de détection du capteur (302) ou de leur combinaison, dans lequel le au moins un second transducteur (314) comprend la pluralité de transducteurs déterminés.

**12.** Procédé selon la revendication 9, dans lequel le premier nombre de la pluralité de transducteurs déterminés est de six transducteurs et le second nombre de tours que le capteur (302) peut compter est de dix.

**13.** Procédé selon la revendication 9, comprenant en outre la conversion, au niveau d'un processeur, du résultat du premier transducteur (117) et du au moins un second transducteur (314) en une représentation d'une position angulaire absolue de l'élément rotatif (205).

**14.** Procédé selon la revendication 9, comprenant en outre le couplage du manchon (304) avec un palier de butée configuré pour maintenir le manchon (304) en association avec les filetages de l'arbre en cas de déformation pour permettre au manchon (304) d'être à nouveau associé à l'arbre en réponse à la rotation en sens inverse du rotor.

**15.** Procédé selon la revendication 9, comprenant en outre le montage du au moins un second transducteur (314) sur une carte de circuit imprimé.

FIG. 1

FIG. 2

FIG. 3

ROTATING
MEMBER
205

SLEEVE
(FULL CLOCKWISE
POSITION)
402

SIX TURN
GROOVES
404

400

FIG. 4A

ROTATING
MEMBER
205

SLEEVE
(MIDDLE POSITION)
402'

420

FIG. 4B

ROTATING
MEMBER
205

SLEEVE
(FULL COUNTER
CLOCKWISE POSITION)
402''

440

FIG. 4C

MAGNET
506

ANTI-ROTATION PIN
508

SPRING LOADED
BALL FITS IN
GROOVES
503

SLEEVE
504

500

FIG. 5

EP 3 025 126 B1

ROTATING
MAGNET
316

MAIN PRINTED
CIRCUIT BOARD
306

HOUSING
310

LINEAR PRINTED
CIRCUIT BOARD
308

302

ROTATING
MEMBER
205

LINEAR
HALL SENSORS
314

SLEEVE
304

MAGNET
312

FIG. 6A

LINEAR PRINTED
CIRCUIT BOARD
308

302

ROTATING
MEMBER
205

HOUSING
310

AXIS
303

FIG. 6B

FIG. 6C

MOTHER PCB
(TOP PERSPECTIVE)
706

MICROPROCESSOR
711

DAUGHTER
PCB
708

1:6 MUX
706

3.3V
REGULATOR
709

FIG. 7A

MOTHER PCB
(BOTTOM PERSPECTIVE)
706

DAUGHTER
PCB
708

HALL EFFECT
SENSOR
722

FIG. 7B

EP 3 025 126 B1

MOTHER PCB
706

INTERCONNECT
742

740

DAUGHTER
PCB
708

FIG. 7C

DAUGHTER
PCB
708

760

LINEAR POSITION
SENSORS
762

MOTHER PCB
706

FIG. 7D

EP 3 025 126 B1

DAUGHTER PCB
708

SLOT IN
HOUSING
817

LINEAR
SENSORS
862

FIG. 8A

DAUGHTER PCB
708

AXIS
803

802

ROTARY MAGNET
856

ROTOR WITH MAGNET
854

FIG. 8B

EP 3 025 126 B1

LINEAR
MAGNET
912

ROTARY
MEMBER
905

ROTARY
MAGNET
856

SLEEVE
904

ROTOR
909

900

FIG. 9A

LINEAR
MAGNET
912

SLEEVE
904

910

FIG. 9B

EP 3 025 126 B1

EP 3 025 126 B1

IDEAL

IDEAL LINEAR
SENSOR OUTPUT
1001

FIG. 10A

Sen0
Sen1
Sen2
Sen3
Sen4
Sen5

1003

SENSOR 4
1012

SENSOR 5
1014

1024
896
768
640
512
384
256
128
0

SENSOR 0
1004

SENSOR 1
1006

SENSOR 2
1008

SENSOR 3
1010

-1800  -1440  -1080  -720  -360  0  360  720  1080  1440  1800

FIG. 10B

24

FIG. 10C

FIG. 11

FIG. 12A

HALL-EFFECT
SENSOR
VALUE
1242

CORRELATION
VALUE
1244

Sen360
COR

1240

27

EP 3 025 126 B1

FIG. 12B

FIG. 12C

HOUSING
1310

BEARING
SUPPORT
1338

LID
1336

ROTOR
1309

SPACER
1332

MOTHER PCB
1306

SLEEVE
1304

O-RING
1326

DAUGHTER PCB
1308

1300

FIG. 13

EP 3 025 126 B1

~1400

RETRIEVE
INPUT FROM LINEAR
SENSORS ~1402

↓

DETERMINE LINEAR SENSOR
WITH LARGEST VALUE ~1404

↓

CALCULATE DIFFERENCE VALUE
BASED ON LINEAR SENSOR
WITH LARGEST VALUE ~1406

↓

CALCULATE
CUTOFF VALUE ~1408

↓

CALCULATE
TURN NUMBER BASED ON
CUTOFF VALUE, THE IDENTITY OF THE LINEAR
SENSOR WITH THE HIGHEST VALUE, AND THE
OUTPUT OF THE HALL-EFFECT SENSOR ~1410

FIG. 14

1500

i = 1
j = 0 —1502

1504

sensor$_i$ > sensor$_j$
?  —YES→ j = i —1506

NO

1508— i = i + 1

1510

i = 5
? —NO

YES

1512

j = 4
? —NO

YES

1514— DIFF = 1040 - sensor$_{j+1}$

1520— DIFF = sensor$_{j+2}$ - sensor$_{j+1}$ + 600

1516— COR = sensor$_H$ ÷ 30

CUT = DIFF - COR —1518

1522

CUT > 600
? —YES

NO

1528

CUT < 250
? —YES

NO

1524— TURN = 2 x (j +1) - 1

1530— TURN = 2 x (j +1)

1532— TURN = 2 x (j +1) + 1

OUTPUT = 4096 x TURN - sensor$_H$

1526

FIG. 15

32

**EP 3 025 126 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 95184713 A
- US 95185813 A
- WO 2006087627 A1
- DE 102011078597 A